# EUROPÄISCHE PATENTSCHRIFT

(11) **EP 2 718 519 B1**
(45) Veröffentlichungstag und Bekanntmachung des Hinweises auf die Patenterteilung: **19.08.2015**
(21) Anmeldenummer: 12725852.3
(22) Anmeldetag: 07.06.2012
(51) Int. Cl.: E04H 12/08, E04H 12/34, F03D 11/04, E04H 12/00

(54) **WINDENERGIEANLAGEN-TURM**
WIND ENERGY PLANT TOWER
TOUR ÉOLIENNE

(30) Priorität: 10.06.2011 DE 102011077428
(43) Veröffentlichungstag der Anmeldung: 16.04.2014
(73) Patentinhaber: Wobben Properties GmbH, 26605 Aurich (DE)
(72) Erfinder: BRENNER, Albrecht, 26607 Aurich (DE); MERTENS, Rene, 16515 Oranienburg (DE); PAPADOPOULOS, Panos, 26603 Aurich (DE); KERSTEN, Roy, 39291 Hohenwarthe (DE)
(74) Vertreter: Eisenführ Speiser
(86) Internationale Anmeldenummer: PCT/EP2012/060834
(87) Internationale Veröffentlichungsnummer: WO 2012/168387

(56) Entgegenhaltungen:
- EP-A1- 2 006 471
- EP-B1- 1 606 514
- WO-A2-2010/134029
- DE-T2-602005 002 760

## Beschreibung

Die vorliegende Erfindung betrifft einen Windenergieanlagen-Turm.

Die Türme von Windenergieanlagen werden typischerweise aus Turmsegmenten aufgebaut, wobei die Turmsegmente typischerweise Fertigteile darstellen. Die Segmente sind typischerweise konisch oder zylindrisch ausgestaltet. Die Turmsegmente können entweder aus Stahl oder Beton hergestellt werden. Je höher ein Turm einer Windenergieanlage sein soll, desto größer ist die Grundfläche der unteren Turmsegmente. Die Abmessungen der unteren Turmsegmente werden jedoch durch die Transportmöglichkeiten begrenzt.

EP 1 606 514 B1 zeigt einen Turm einer Windenergieanlage mit einer Anzahl von zylindrischen oder konischen Turmabschnitten bzw. Turmsegmenten. Die Turmabschnitte bzw. Turmsegmente können am oberen und unteren Ende jeweils einen horizontalen Flansch aufweisen. Zusätzlich dazu können vertikale Flansche vorgesehen sein, so dass ein Turmsegment in Längsrichtung teilbar ist. Die vertikalen Flansche werden auf der Innenseite einer Mantelfläche der Turmabschnitte befestigt, so dass sich die Mantelflächen der Turmabschnitte an ihren Verbindungsstellen berühren. Die vertikalen Flansche sind auf die Innenseite der Mantelfläche aufgeschweißt und sind gegenüber den Enden der Mantelflächen um einen Abstand versetzt, so dass Distanzelemente zwischen den benachbarten vertikalen Flanschen vorgesehen werden können.

DE 60 2005 002 760 T2 zeigt einen Turm einer Windenergieanlage. Der Turm besteht aus vorgefertigten Metallwandteilen, welche jeweils zwei Längsflansche aufweisen.

DE 101 52 018 A1 zeigt einen Turm einer Windenergieanlage bestehend aus mehreren Segmenten, wobei die Segmente jeweils mindestens einen horizontal ausgerichteten Flansch aufweisen.

WO 2010/134029 A1 zeigt einen Turm einer Windenergieanlage, welcher mehrere Segmente aufweist, wobei die Segmente jeweils mindestens zwei Längsflansche aufweisen. US 7,770,343 B2 zeigt einen Turm einer Windenergieanlage, welcher aus mehreren Segmenten aufgebaut sein kann, wobei die Segmente jeweils Längsflansche aufweisen.

Es ist eine Aufgabe der vorliegenden Erfindung, einen Turm einer Windenergieanlage vorzusehen, der auch bei sehr hohen Türmen eine verbesserte Statik aufweist.

Diese Aufgabe wird durch einen Windenergieanlagen-Turm gemäß Anspruch 1 gelöst.

Somit wird ein Windenergieanlagen-Turm vorgesehen, der aus einer Mehrzahl von Turmsegmenten aufgebaut ist, welche jeweils einen oberen und unteren horizontalen Flansch aufweisen. Mindestens eines der Segmente weist mindestens zwei Längsflansche auf (die vertikal ausgerichtet sind). Jeder der Längsflansche weist eine erste Auflagefläche auf, welche mit einer Auflagefläche eines anderen Längsflansches in Kontakt steht. Die Mantelflächen der Turmsegmente werden auf die zweite, der ersten gegenüberliegende Auflagefläche der Längsflansche aufgeschweißt. Damit berühren sich die Enden der Mantelflächen der Turmsegmente nicht, sondern sie sind über die Längs- bzw. Vertikalflansche miteinander gekoppelt.

Dies ist vorteilhaft, da die Längsflansche getrennt von den Mantelflächen mit sehr großer Genauigkeit hergestellt werden können, so dass zwei Längsflansche mit sehr guter Passgenauigkeit aneinander befestigt werden können. Dies ist wiederum vorteilhaft hinsichtlich der Statik des gesamten Turmes. Gemäß der Erfindung werden die Längsflansche und die Mantelflächen der Turmsegmente nicht einstückig sondern getrennt voneinander hergestellt. Erst anschließend können die Mantelflächen an die zweiten Auflageflächen der Längsflansche angeschweißt werden.

Gemäß einem Aspekt der Erfindung weisen die Längsflansche eine dritte Seite auf, die nach außen sichtbar ist.

Gemäß einem Aspekt ist eine Nut in einem der Längsflansche vorgesehen. Die Längsflansche können beispielsweise mittels Schrauben aneinander befestigt werden.

Gemäß einem Aspekt der Erfindung ist die Mantelfläche im Wesentlichen bündig mit der dritten Seite.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine Schnittansicht eines Turmsegmentes eines Windenergieanlagen-Turms gemäß einem ersten Ausführungsbeispiel,
- Fig. 2: zeigt einen schematischen Querschnitt des Turmsegmentes im Bereich der Längsflansche gemäß einem ersten Ausführungsbeispiel,
- Fig. 3: zeigt eine schematische Schnittansicht eines Ausschnittes des Turmsegmentes gemäß dem ersten Ausführungsbeispiel,
- Fig. 4: zeigt eine schematische Schnittansicht eines Ausschnittes eines Turmsegmentes gemäß einem zweiten Ausführungsbeispiel, und
- Fig. 5: zeigt eine schematische Schnittansicht eines Turmes gemäß einem dritten Ausführungsbeispiel.

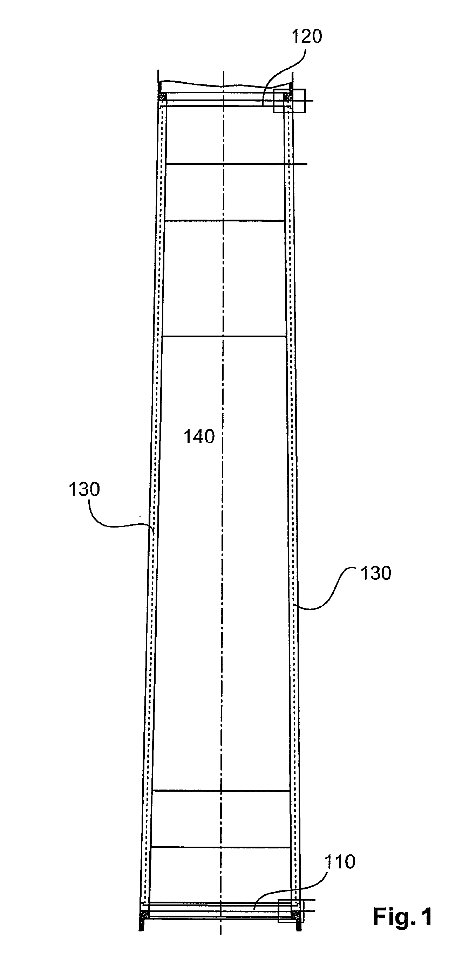

Fig. 1 zeigt eine Schnittansicht eines Turmsegmentes eines Windenergieanlagen-Turms gemäß einem ersten Ausführungsbeispiel. Der Turm kann aus einer Mehrzahl von aufeinander gestapelten bzw. angeordneten Turmsegmenten 100 bestehen. Das Turmsegment 100 weist einen unteren horizontalen Flansch 110, einen oberen horizontalen Flansch 120, zwei Längsflansche 130 sowie eine Mantelfläche 140 auf, welche sich zwischen dem oberen und unteren Flansch 120, 110 und den beiden Längsflanschen 130 erstreckt. Das Turmsegment kann somit aus zwei Hälften bestehen, die jeweils Längsflansche 130 aufweisen. Mittels der Längsflansche 130 kann die eine Hälfte des Turmsegments 100 an der anderen Hälfte des Turmsegments mit entsprechenden Längsflanschen 130 befestigt werden. Der obere und untere Flansch 120, 110 dienen zur Befestigung von weiteren Turmsegmenten, um einen Turm einer Windenergieanlage aufzubauen. Das Turmsegment kann auch in mehr als zwei Teile aufgeteilt sein.

Gemäß der Erfindung werden die Längsflansche 130 separat zu der Fläche 140 hergestellt.

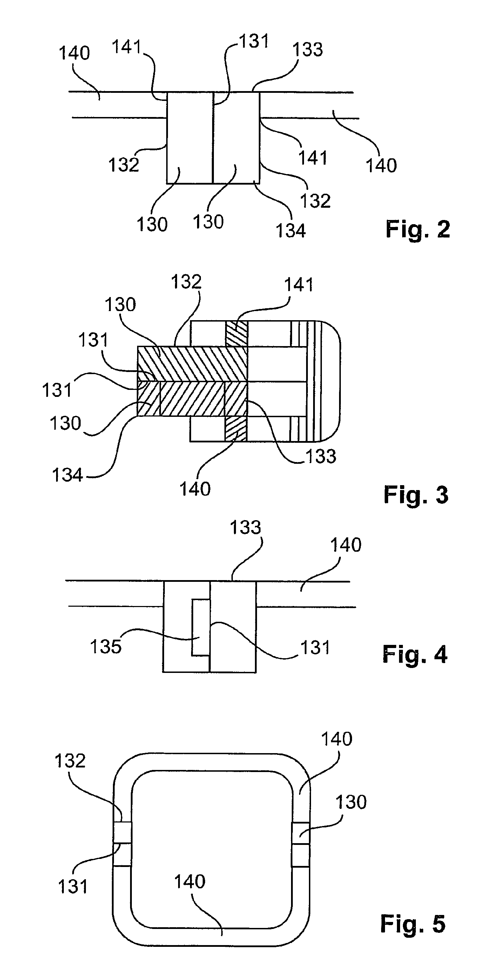

Fig. 2 zeigt einen schematischen Querschnitt des Turmsegmentes im Bereich der Längsflansche gemäß einem ersten Ausführungsbeispiel. In Fig. 2 sind zwei Längsflansche 130 gezeigt. Die Längsflansche weisen eine erste (Innen-)Seite (eine erste Auflagenseite) 131, eine zweite (Außen-)Seite (zweite Auflagenseite gegenüberliegend zur ersten Seite) 132, eine dritte (nach außen gerichtete) Seite 133 und eine vierte (nach innen gerichtete) Seite 134 auf. Zwei Längsflansche 130 liegen jeweils mit ihren ersten Seiten 131 aufeinander bzw. aneinander und können beispielsweise miteinander verschraubt werden. Die Mantelflächen 140 sind mit ihrem ersten Ende 141 an der zweiten Auflagenseite 132 des Flansches befestigt (beispielsweise verscheißt). Somit stehen die ersten Auflagenseiten 131 der Längsflansche 130 miteinander in Kontakt, während die Mantelflächen 140 mit ihren ersten Enden 141 an der zweiten Auflagenseite 132 der Längsflansche 130 befestigt, z. B. verschweißt sind. Dies (d. h. die separate Herstellung der Längsflansche 130 und der Mantelflächen) ist insbesondere vorteilhaft, weil die Längsflansche als gerades Bauteil sehr exakt gedreht bzw. hergestellt werden können. Somit können sehr exakte Auflageflächen (erste Seite 131) vorgesehen sein, so dass die Längsflansche mit ihren ersten Seiten sehr gut aneinander befestigt werden können.

Fig. 3 zeigt eine schematische Schnittansicht eines Ausschnittes des Turmsegmentes gemäß dem ersten Ausführungsbeispiel. Jeder Längsflansch 130 weist eine erste Seite 131, eine zweite Seite 132, eine dritte Seite 133 und eine vierte Seite 134 auf. Die ersten Seiten 131 können sehr exakt gefertigt werden. An den zweiten Seiten 132 (gegenüber der ersten Seite) können die Mantelflächen an dem Flansch 130 befestigt (beispielsweise verscheißt) werden. Die Flansche können beispielsweise mittels Schraubverbindung aneinander befestigt werden.

Wenn zwei Abschnitte eines längsgeteilten Turmsegmentes mittels der Längsflansche 130 aneinander befestigt sind, dann können die beiden Längsflansche 130 sowie die Schweißstellen mit den Mantelflächen 140 von außen gesehen werden, da sich die Flansche 130 bis nach außen erstrecken, d. h. die dritten Seiten 133 der Flansche 130 sind von außen sichtbar.

Fig. 4 zeigt eine schematische Schnittansicht eines Ausschnittes eines Turmsegmentes gemäß einem zweiten Ausführungsbeispiel, welches auf dem ersten Ausführungsbeispiel basieren kann. Einer der beiden Flansche 130 kann an seiner ersten Seite 131 eine Nut 135 aufweisen. Ferner können Durchgangslöcher 136 an den beiden Längsflanschen 130 vorgesehen sein, damit die Flansche mittels Schraubverbindungen aneinander befestigt werden können. Die Nut 135 kann beispielsweise eine Tiefe von 1 bis 10 mm aufweisen. Vorzugsweise ist die Tiefe, Breite und Höhe der Nut derart ausgestaltet, dass ein Gleichgewicht zwischen der durch die Schraubverbindungen erzeugten Kraft und der durch den Wind erzeugten Kraft erreicht wird.

Fig. 5 zeigt eine schematische Schnittansicht eines Turmes gemäß einem dritten Ausführungsbeispiel, welches auf dem ersten oder zweiten Ausführungsbeispiel basieren kann. In Fig. 5 ist ein Querschnitt eines Turmsegmentes mit zwei Turmabschnitten jeweils mit einer Mantelfläche 140 und zwei Längsflanschen 130 gezeigt, wobei sowohl die dritten Seiten 133 der Längsflansche als auch die Schweißnähte zwischen Längsflansch 130 und Mantelflansch 140 von außen sichtbar sind.

Der Turm gemäß der Erfindung wird optional aus Stahl hergestellt, d. h. die Turmsegmente bestehen aus Stahl.

## Patentansprüche

1. Windenergieanlagen-Turm, mit
einer Mehrzahl von Turmsegmenten (100), welche jeweils einen oberen und unteren horizontalen Flansch (120,110) sowie eine Mantelfläche (140) aufweisen,
wobei mindestens ein erstes Turmsegment der Mehrzahl der Turmsegmente (100) mindestens eine erste und zweite Hälfte jeweils mit einem ersten und zweiten Längsflansch (130) aufweist,
wobei die ersten und zweiten Längsflansche (130) einer ersten Hälfte des ersten Turmsegmentes eine erste Seite (131) zum Anlegen an eine erste Seite (130) eines ersten oder zweiten Längsflansches (130) der zweiten Hälfte des ersten Turmsegmentes und jeder Längsflansch (130) eine zweite Seite (132) aufweist, an welcher die Mantelfläche (140) angeschweißt ist, wobei die zweite Seite (132) der ersten Seite (131) gegenüberliegt,
**dadurch gekennzeichnet, dass**
die erste Seite (131) des ersten oder zweiten Längsflansches (130) der ersten Hälfte des ersten Turmsegmentes zumindest teilweise unmittelbar an der ersten Seite (131) eines ersten oder zweiten Längsflansches (130) der zweiten Hälfte des ersten Turmsegmentes (100) befestigt ist,
wobei die ersten und zweiten Längsflansche (130) jeweils eine dritte Seite (133) aufweisen, welche nach außen sichtbar ist.

2. Windenergieanlagen-Turm nach Anspruch 1, wobei
einer der Längsflansche (130) an seiner ersten Seite (131) eine Nut (135) aufweist, wobei die Längsflansche (130) eine Mehrzahl von Durchgangslöchern (136) zur Aufnahme von Schraubverbindungen aufweisen.

3. Windenergieanlagen-Turm nach einem der Ansprüche 1 bis 2, wobei
die Mantelfläche (140) im Wesentlichen bündig mit der dritten Seite (133) der Längsflansche (130) ausgebildet ist.

4. Verfahren zum Herstellen eines Windenergieanlagen-Turms aus einer Mehrzahl von Turmsegmenten (100), wobei ein erstes Turmsegment (100) mindestens eine erste und zweite Hälfte jeweils mit einem oberen und unteren horizontalen Flansch (120, 110), eine Mantelfläche (140) und mindestens einen ersten und zweiten Längsflansch (130) aufweist, wobei der erste und zweite Längsflansch (130) jeweils eine erste, eine zweite, der ersten gegenüberliegende, und eine dritte Seite (131, 132, 133) aufweist, mit den Schritten:
Fertigen der Längsflansche (130), und
Anschweißen der Mantelfläche (140) an der zweiten Seite (132) der Längsflansche (130), **gekennzeichnet durch** die Schritte:
Platzieren der ersten Seiten (131) der ersten oder zweiten Längsflansche (130) der mindestens ersten und zweiten Hälfte des ersten Turmsegmentes derart aneinander, dass die dritten Seiten (133) der Längsflansche (130) nach außen sichtbar sind,
Verschrauben der zwei Längsflansche aneinander.

## Claims

1. Wind turbine tower, having
a plurality of tower segments (100) which each have an upper and a lower horizontal flange (120, 110) and a covering face (140), wherein at least a first tower segment of the plurality of tower segments (100) has at least a first and second half which each have a first and second longitudinal flange (130),
wherein the first and second longitudinal flanges (130) of a first half of the first tower segment have a first side (131) for placing on a first side (130) of a first or second longitudinal flange (130) of the second half of the first tower segment and each longitudinal flange (130) has a second side (132), to which the covering face (140) is welded, wherein the second side (132) is opposite the first side (131),
**characterised in that**
the first side (131) of the first or second longitudinal flange (130) of the first half of the first tower segment is secured at least partially directly to the first side (131) of a first or second longitudinal flange (130) of the second half of the first tower segment (100),
wherein the first and second longitudinal flanges (130) each have a third side (133) which can be seen from the outer side.

2. Wind turbine tower according to claim 1, wherein one of the longitudinal flanges (130) has a groove (135) at the first side (131) thereof, wherein the longitudinal flanges (130) have a plurality of through-holes (136) for receiving screw connections.

3. Wind turbine tower according to either claim 1 or claim 2, wherein the covering face (140) is constructed so as to be substantially flush with the third side (133) of the longitudinal flanges (130).

4. Method for producing a wind turbine tower from a plurality of tower segments (100), wherein a first tower segment (100) has at least a first and second half which each have an upper and lower horizontal flange (120, 110), a covering face (140) and at least a first and second longitudinal flange (130), wherein the first and second longitudinal flange (130) each have a first side, a second side which is opposite the first, and a third side (131, 132, 133), having the steps of:
producing the longitudinal flanges (130), and
welding the covering face (140) to the second side (132) of the longitudinal flanges (130), **characterised by** the steps of:
placing the first sides (131) of the first or second longitudinal flanges (130) of the at least first and second half of the first tower segment one on the other in such a manner that the third sides (133) of the longitudinal flanges (130) can be seen from the outer side,
screwing the two longitudinal flanges to each other.

## Revendications

1. Tour d'éolienne, comprenant
une multitude de segments de tour (100), qui présentent respectivement une bride horizontale supérieure et une bride horizontale inférieure (120, 110) ainsi qu'une surface extérieure (140),
sachant qu'au moins un premier segment de tour de la multitude de segments de tour (100) présente au moins une première moitié et une deuxième moitié comprenant respectivement une première bride longitudinale et une deuxième bride longitudinale (130),
sachant que la première bride longitudinale et la deuxième bride longitudinale (130) d'une première moitié du premier segment de tour présentent un premier côté (131) destiné à être placé contre un premier côté (130) d'une première bride longitudinale ou d'une deuxième bride longitudinale (130) de la deuxième moitié du premier segment de tour et chaque bride longitudinale (130) présente un deuxième côté (132), au niveau duquel la surface extérieure (140) est soudée, sachant que le deuxième côté (132) fait face au premier côté (131),
**caractérisée en ce que**
le premier côté (131) de la première bride longitudinale ou de la deuxième bride longitudinale (130) de la première moitié du premier segment de tour est fixé au moins en partie directement au niveau du premier côté (131) d'une première bride longitudinale ou d'une deuxième bride longitudinale (130) de la deuxième moitié du premier segment de tour (100),
sachant que la première bride longitudinale et la deuxième bride longitudinale (130) présentent respectivement un troisième côté (133), qui est visible de l'extérieur.

2. Tour d'éolienne selon la revendication 1, sachant que
une des brides longitudinales (130) présente, au niveau de son premier côté (131), une rainure (135), sachant que la bride longitudinale (130) présente une pluralité de trous de passage (136) servant à recevoir des systèmes d'assemblage par vissage.

3. Tour d'éolienne selon l'une quelconque des revendications 1 à 2, sachant que
la surface extérieure (140) est réalisée essentiellement au même niveau que le troisième côté (133) de la bride longitudinale (130).

4. Procédé servant à fabriquer une tour d'éolienne à partir d'une multitude de segments de tour (100), sachant qu'un premier segment de tour (100) présente au moins une première moitié et une deuxième moitié comprenant respectivement une bride horizontale supérieure et une bride horizontale inférieure (120, 110), une surface extérieure (140) et au moins une première bride longitudinale et une deuxième bride longitudinale (130), sachant que la première bride longitudinale et la deuxième bride longitudinale (130) présentent respectivement un premier côté, un deuxième côté, faisant face au premier côté et un troisième côté (131, 132, 133), lequel procédé comprend les étapes qui suivent consistant à :
produire la bride longitudinale (130), et
souder la surface extérieure (140) au niveau du deuxième côté (132) de la bride longitudinale (130) **caractérisé par** les étapes qui suivent consistant à :
placer les premiers côtés (131), de la première bride longitudinale ou de la deuxième bride longitudinale (130) de l'au moins une première moitié et de l'au moins une deuxième moitié du premier segment de tour, les uns contre les autres de telle manière que les troisièmes côtés (133) de la bride longitudinale (130) soient visibles de l'extérieur,
visser l'une à l'autre les deux brides longitudinales.
